# EUROPÄISCHE PATENTSCHRIFT

(11) **EP 0 862 487 B1**
(45) Veröffentlichungstag und Bekanntmachung des Hinweises auf die Patenterteilung: **11.08.1999**
(21) Anmeldenummer: 96934637.8
(22) Anmeldetag: 11.10.1996
(51) Int. Cl.: B01D 11/04

(54) **MEHRSTUFIGER DREIPHASEN-EXTRAKTOR**
MULTISTAGE THREE-PHASE EXTRACTOR
EXTRACTEUR A TROIS PHASES ET A ETAGES MULTIPLES

(30) Priorität: 19.10.1995 RU 95117738 N
(43) Veröffentlichungstag der Anmeldung: 09.09.1998
(73) Patentinhaber: BAYER AG, 51368 Leverkusen (DE)
(72) Erfinder: KOSTANIAN, Artak Eranosovich, Moskovskaya obl., 142701 (RU)
(86) Internationale Anmeldenummer: EP9604424
(87) Internationale Veröffentlichungsnummer: WO9714488

(56) Entgegenhaltungen:
- FR-A- 1 571 433
- US-A- 1 951 787
- US-A- 2 023 109
- US-A- 2 813 011
- US-A- 2 851 396
- US-A- 3 165 384
- US-A- 3 857 919
- US-A- 4 293 387

## Beschreibung

Die Erfindung geht aus von einem mehrstufigen Dreiphasen-Extraktor mit Stutzen für die Zufuhr und Abfuhr einer ersten und einer zweiten dispersen Phase und mit untereinander angeordneten Kontaktstufen, welche jeweils eine erste und eine zweite miteinander verbundene, mit der kontinuierlichen Phase gefüllte und mit einer Dispergiervorrichtung ausgestattete Kammer enthalten.

Apparate zur Durchführung von Prozessen der dreiphasigen flüssigen Extraktion sind bekannt in Form eines Zweikammersystems, wobei die beiden Kammern im oberen Teil miteinander verbunden sind oder eine poröse Trennwand besitzen. Die Kammern sind ausgefüllt mit einer kontinuierlichen Phase, durch welche zwei dispergierende Phasen, die nicht löslich in der kontinuierlichen Phase sind, in Form von Tropfen durchgeleitet werden. Hierbei erfolgt der Übergang von Stoffen aus einer dispergierten Phase (Raffinat-Phase) durch die kontinuierliche Phase (auch Flüssigmembranphase genannt) in die andere dispergierte Phase (Extrakt-Phase) (s. z.B. Journal ''Theoretische Grundlagen der chemischen Technologie" 1984, T. 18; Nr. 6, S. 736 - 738).

Diese Apparate sind hinsichtlich ihrer Leistungsfähigkeit und der Erweiterung auf vielstufige Prozesse verbesserungsbedürftig.

Vom technischen Standpunkt sowie vom erreichbaren Effekt her kommt der dreiphasige Extraktor, welcher aus einer ersten und zweiten, mit der kontinuierlichen Phase (Flüssig-Membran) gefüllten Kammer besteht, den bekannten Apparaten am nächsten. Die Kammern besitzen Vorrichtungen für die Dispergierung der jeweiligen Phase und sind miteinander durch Überläufe für die Zirkulation der kontinuierlichen Phase verbunden. Die Überläufe sind in Form von Rohren ausgeführt, welche den oberen und unteren Teil der Kammer jeweils miteinander verbinden. Der Extraktor ist mit Stutzen für die Zu- und Abführung der ersten und zweiten dispergierten Phase versehen. (Russische Patentanmeldung Nr. 94-015776/26 (015406) vom 27.04.94).

Die zu dispergierende Phase, welche die Ausgangslösung ist und das Lösungsmittel (Extrakt-Phase) werden jeweils in der entsprechenden Kammer mittels einer Dispergiervorrichtung in Tröpfchen zerteilt, die sich als Tropfenschwarm durch die kontinuierliche Phase bewegen. Auf Grund des Dichteunterschiedes der Emulsionen in der ersten und zweiten Kammer erfolgt eine Zirkulation der kontinuierlichen Phase durch die oberen und unteren Überläufe, so daß ein Übergang des zu extrahierenden Stoffes aus einer Kammer in die andere und aus der ersten zu dispergierenden Phase in die zweite erfolgt.

Der Nachteil des bekannten Extraktors liegt in der Schwierigkeit einer optimalen Gleich- oder Gegenstromfahrweise der kontaktierenden Phasen, was für eine Reihe von Trennprozessen negative Auswirkungen haben kann

Die Aufgabe der Erfindung besteht in der Erhöhung der Effektivität des mehrstufigen Dreiphasen-Extraktors durch Schaffung der Voraussetzungen für verschiedenartige Strömungszustände der kontinuierlichen Phasen

Diese Aufgabe wird, ausgehend von dem eingangs beschriebenen Dreiphasenreak-tor, erfindungsgemäß dadurch gelöst, daß die erste Kammer der oberen Stufe mit der zweiten Kammer der darunterliegenden Stufe verbunden ist, und daß die erste Stufe mit einem Stutzen für die Zuführung und die letzte Stufe mit einem Stutzen für die Abführung der kontinuierlichen Phase versehen ist.

Die Verbindung der ersten Kammer der oberen Stufe mit der zweiten Kammer der unteren Stufe sowie die Anbringung von Stutzen an der ersten und letzten Stufe zur Zu- und Abführung der kontinuierlichen Phase erlaubt verschiedene Strömungszustände im Extraktor zu realisieren, wobei nacheinander eine mehrphasige Kontaktierung der kontinuierlichen Phase mit der ersten und zweiten dispergierten Phase erfolgt.

Vorteilhaft ist der obere Teil der ersten Kammer mit dem unteren Teil der zweiten Kammer derselben Stufe und der untere Teil der ersten Kammer mit dem oberen Teil der zweiten Kammer der darunterliegenden Stufe verbunden.

Alternativ kann auch der untere Teil der ersten Kammer mit dem oberen Teil der zweiten Kammer derselben Stufe und der obere Teil der ersten Kammer mit dem unteren Teil der zweiten Kammer der darunterliegenden Stufe verbunden sein.

Vorzugsweise sind die Verbindungen zwischen den Kammern als Separationszonen für die dispergierten Phasen ausgebildet.

Wenn der obere Teil der ersten Kammer mit dem unteren Teil der zweiten Kammer derselben Stufe und der untere Teil mit dem oberen Teil der zweiten Kammer der unteren Stufe verbunden wird, so wird im Extraktor eine Gleich- oder Gegenströmung der kontinuierlichen Phase mit der ersten und zweiten dispergierten Phase erzeugt.

Die Verbindung des unteren Teiles der ersten Kammer mit dem oberen Teil der zweiten Kammer derselben Stufe und des oberen Teiles mit dem unteren Teil der zweiten Kammer der unteren Stufe ermöglicht den Durchfluß der kontaktierenden Phasen im Gegenstrombetrieb in den Stufen und im Gleichstrombetrieb im ganzen Extraktor. Die Möglichkeit verschiedene Strömungszustände in dem mehrstufigen Dreiphasen-Extraktor zu erzeugen, erlaubt die Realisierung von hocheffektiven chemischen Reaktiv-Trennverfahren.

In Figur 1 - 4 sind schematisch vier mögliche Varianten des erfindungsgemäßen Extraktors dargestellt.

In Figur 1 - 2 sind Extraktoren dargestellt, bei denen in den einzelnen Stufen und auch im ganzen Apparat mit einer Gegenstromfahrweise gearbeitet wird.

In Figur 3 - 4 sind Extraktoren zur Durchführung von Trennprozessen gezeigt, bei denen mit einem Gegenstrombetrieb in den einzelnen Stufen und einem Gleichstrombetrieb im gesamten Apparat optimale Verfahrensbedingungen erzielt werden.

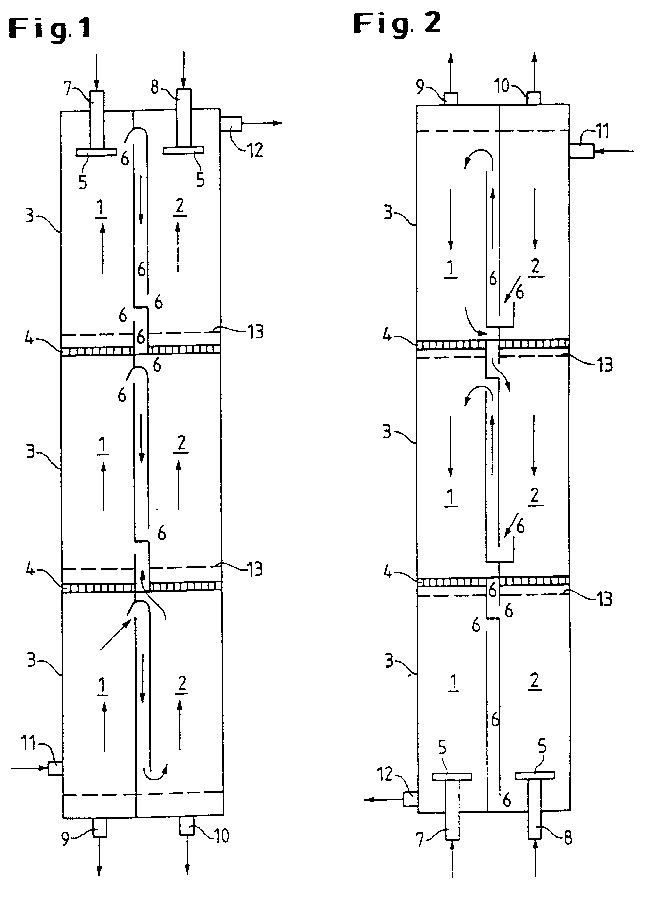

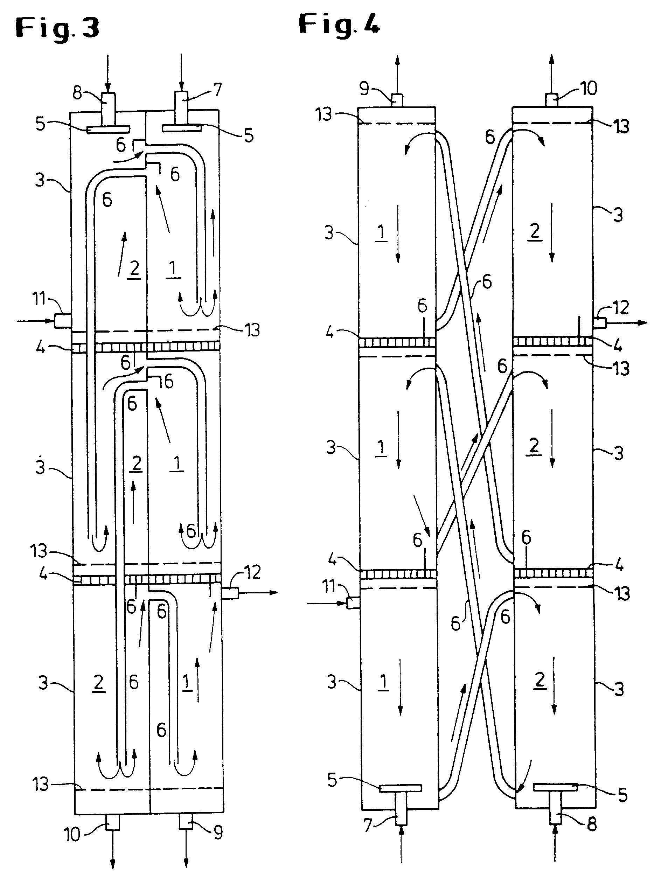

In Figur 1 und 3 sind Extraktoren für diejenigen Fälle dargestellt, wo die Dichten der dispergierten Phasen größer sind als die Dichte der kontinuierlichen Phase. Dagegen sind in Figur 2 und 4 Extraktoren dargestellt, wo die Dichten der dispersen Phasen kleiner sind als die Dichte der kontinuierlichen Phase .

Der mehrstufige Dreiphasen-Extraktor besteht aus den ersten Kammern 1 und den zweiten Kammern 2, die jeweils in den Stufen 3 untergebracht sind. Die Stufen 3 sind in dem Apparat untereinander angeordnet und durch perforierte Böden 4 (Siebböden) getrennt, die als Dispergierorgane dienen. Die Kammern der ersten Stufe 3 sind mit Dispergiervorrichtungen 5 ausgerüstet.

Die Kammern 1 und 2, die durch Überläufe 6 verbunden sind, können in einem Gehäuse (Fig. 1 - 3) oder in zwei Kolonnen (Fig. 4) angeordnet werden. Dabei ist die erste Kammer 1 in jeder oberen Stufe 3 mit der zweiten Kammer 2 der unteren Stufe verbunden. Die nachfolgend beschriebenen zwei Varianten a) und b) von Verbindungen zwischen der Kammer 1 und der Kammer 2 haben sich besonders bewährt:
a) Der obere Teil der ersten Kammer 1 ist mit dem unteren Teil der zweiten Kammer 2 derselben Stufe 3 und der untere Teil der Kammer 1 ist mit dem oberen Teil der zweiten Kammer 2 der darunterliegenden Stufe 3 verbunden (Fig. 1 u. 2).
b) Der untere Teil der ersten Kammer 1 ist mit dem oberen Teil der zweiten Kammer 2 derselben Stufe 3 und der obere Teil der ersten Kammer 1 ist mit dem unteren Teil der zweiten Kammer 2 der darunteliegenden Stufe 3 verbunden (Fig. 3 u. 4).

An den Verbindungen 6 bilden sich Separationszonen in Form einer hydraulischen Stauschicht für die dispergierten Phasen aus. Der Extraktor ist mit Stutzen 7 und 8 für die Zuführung und mit Stutzen 9 und 10 für die Abführung der ersten und zweiten dispergierten Phase, sowie mit Stutzen 11 und 12 für die Zu- und Abführung der kontinuierlichen Phase ausgerüstet.

Der mehrstufige Dreiphasen-Extraktor arbeitet nach folgendem Prinzip:

Die Kammern 1 und 2 der Stufen 3 werden mit der kontinuierlichen Phase gefüllt. Die zu dispergierenden Phasen werden den Kammern 1 und 2 der ersten Stufe durch die Stutzen 7 und 8 und die Dispergiervorrichtungen 5 zugeführt. In Abhängigkeit der Dichten der dispergierten Phasen bewegen sich die Tropfen in den Kammern 1 und 2 nach oben oder nach unten und koaleszieren an der Phasengrenze 13 unter oder über dem perforierten Boden 4. Die Vorgänge der Dispergierung und der Koaleszenz wiederholen sich in jeder Stufe 3. In Abhängigkeit von dem gewünschten Strömungszustand wird die kontinuierliche Phase durch den Stutzen 11 in die Kammer 1 (Fig. 1 u. 4) oder Kammer 2 (Fig. 2 u. 3) der ersten (Fig. 3 u. 4) oder letzten Stufe (Fig. 1 u. 2) geleitet. Die kontinuierliche Phase fließt durch die Verbindungen 6 mit den Separationszonen und die Stufen 3 und kontaktiert nacheinander die erste und zweite dispergierte Phase. Dabei erfolgt der Stoffübergang aus einer dispergierten Phase in die andere über die kontinuierliche Phase. Die entsprechende Verbindung der Kammern 1 und 2 in den Stufen 3 des Extraktors gewährleistet eine optimale Kontaktierung der Einzelphasen. Die dispersen Phasen verlassen den Apparat durch die Stutzen 9 und 10. Die kontinuierliche Phase verläßt den Extraktor durch den Stutzen 12.

## Patentansprüche

1. Mehrstufiger Dreiphasen-Extraktor mit Stutzen (7, 8) für die Zuführung und Stutzen (9, 10) für die Abführung einer ersten und zweiten dispersen Phase, sowie untereinander angeordneten Kontaktstufen (3), welche jeweils zwei miteinander verbundene, mit der kontinuierlichen Phase gefüllte und mit einer Dispergiervorrichtung (5) ausgestattete Kammern (1, 2) enthalten, dadurch gekennzeichnet, daß die erste Kammer (1) der oberen Stufe mit der zweiten Kammer (2) der darunterliegenden Stufe verbunden ist, und daß die erste und letzte Stufe mit Stutzen (11, 12) für die Zu- bzw. Abführung der kontinuierlichen Phase versehen sind

2. Extraktor nach Anspruch 1, dadurch gekennzeichnet, daß der obere Teil der ersten Kammer (1) mit dem unteren Teil der zweiten Kammer (2) derselben Stufe und der untere Teil der ersten Kammer (1) mit dem oberen Teil der zweiten Kammer (2) der darunterliegenden Stufe verbunden ist.

3. Extraktor nach Anspruch 1, dadurch gekennzeichnet, daß der untere Teil der ersten Kammer (1) mit dem oberen Teil der zweiten Kammer (2) derselben Stufe und der obere Teil der ersten Kammer(1) mit dem unteren Teil der zweiten Kammer (2) der darunterliegenden Stufe verbunden ist.

4. Extraktor nach Anspruch 1 - 3, dadurch gekennzeichnet, daß die Verbindungen (6) zwischen den Kammern (1, 2) als Separationszonen für die dispergierten Phasen ausgebildet sind

## Claims

1. Multistage three-phase extractor having ports (7, 8) for the feed and ports (9, 10) for the discharge of a first and second disperse phase, and contact stages (3) disposed one beneath the other, each of which comprises two chambers (1, 2) which are connected to one another and are filled with the continuous phase and are equipped with a dispersion apparatus (5), characterized in that the first chamber (1) of the upper stage is connected to the second chamber (2) of the stage beneath it and in that the first stage and last stage are provided with ports (11, 12) for the feed and discharge, respectively, of the continuous phase.

2. Extractor according to Claim 1, characterized in that the upper part of the first chamber (1) is connected to the lower part of the second chamber (2) of the same stage and the lower part of the first chamber (1) is connected to the upper part of the second chamber (2) of the stage beneath this.

3. Extractor according to Claim 1, characterized in that the lower part of the first chamber (1) is connected to the upper part of the second chamber (2) of the same stage and the upper part of the first chamber (1) is connected to the lower part of the second chamber (2) of the stage beneath this.

4. Extractor according to Claim 1-3, characterized in that the connections (6) between the chambers (1, 2) are constructed as separation zones for the dispose phases.

## Revendications

1. Extracteur à trois phases et à plusieurs étages, doté de raccords (7, 8) pour l'amenée et de raccords (9, 10) pour l'évacuation d'une première et d'une deuxième phase dispersée, ainsi que d'étages de contact (3) disposés les uns en dessous des autres et qui contiennent chacun deux chambres (1, 2) reliées I'une à l'autre, remplies de la phase continue et équipées d'un dispositif de dispersion (5), caractérisé en ce que la première chambre (1) de l'étage supérieur est reliée à la deuxième chambre (2) de l'étage situé par-dessous, et en ce que le premier et le dernier étage sont dotés de raccords (11, 12) pour l'amenée ou l'évacuation de la phase continue.

2. Extracteur selon la revendication 1, caractérisé en ce que la partie supérieure de la première chambre (1) est reliée à la partie inférieure de la deuxième chambre (2) du même étage, et la partie inférieure de la première chambre (1) est reliée à la partie supérieure de la deuxième chambre (2) de l'étage situé par-dessous.

3. Extracteur selon la revendication 1, caractérisé en ce que la partie inférieure de la première chambre (1) est reliée à la partie supérieure de la deuxième chambre (2) du même étage, et la partie supérieure de la première chambre (1) est reliée à la partie inférieure de la deuxième chambre (2) de l'étage situé par-dessous.

4. Extracteur selon les revendications 1 à 3, caractérisé en ce que les liaisons (6) entre les chambres (1, 2) sont configurées comme zones de séparation pour les phases dispersées.
